# EUROPEAN PATENT SPECIFICATION

(11) **EP 0 602 161 B1**
(45) Date of publication and mention of the grant of the patent: **02.11.1995**
(21) Application number: 92919499.1
(22) Date of filing: 24.08.1992
(51) Int. Cl.: B21D 51/00, B07B 1/18, D21D 5/16

(54) **A METHOD OF MANUFACTURING A SCREENING DRUM**
VERFAHREN ZUM HERSTELLEN EINER SIEBTROMMEL
PROCEDE DE FABRICATION D'UN TAMBOUR DE CRIBLAGE

(30) Priority: 05.09.1991 SE 9102550
(43) Date of publication of application: 22.06.1994
(73) Proprietor: AB KNUTSILPLATAR, S-467 21 Grästorp (SE)
(72) Inventor: MALM, Jan, S-467 00 Grästorp (SE)
(74) Representative: Sundqvist, Hans
(86) International application number: SE9200572
(87) International publication number: WO9304797

(56) References cited:
- GB-A- 562 087
- US-A- 846 482
- US-A- 3 631 981

## Description

This invention relates to a method of manufacturing a screening drum for screening fibre material.

The object of screening fibre material, such as fibre suspensions of cellulose-containing material, is to separate coarse particles in the form of shives, fibre bundles or other impurities from the fibre material. The screening normally is carried out in screening means comprising a stationary or rotating screening drum. The screening drum is provided with apertures or slots, through which the fibres, but not the impurities, can pass.

Screening drums of this kind normally are manufactured by drilling holes or milling slots in a plate, which then is formed to a drum. In order to obtain an open area as large as possible, i.e. that part of the surface of the screening drum which is perforated, the holes or slots must be arranged densely. At the same time, the strength of the drum must be maintained, which involves high requirements on precision.

Especially in the case of manufacturing slotted drums, which in certain cases are more advantageous than drums with drilled holes, it is difficult to maintain the strength, because the material between the slots will be thin. The slots, therefore, must be made short and be located at a certain mutual distance, which in its turn restricts the open area.

One way of solving this problem is to design the drum of a great number of bars, which are held in place by annular strips. This, however, is a complicated and expensive way of making a screening drum. It is also difficult, moreover, to obtain a uniform slot width across the entire drum.

From the document US-A-3 631 981 a method of manufacturing a screening drum is known, wherein a plane rectangular plate is provided on one side with a great number of parallel grooves extending nearly over the entire plate, the plate is slotted from the other side directly in front of the grooves, and the plate is bent to a drum, the longitudinal slots substantially axially directed and finally a number of annular ribs are welded on the outside of the drum across the grooves.

According to the present invention, the aforesaid problem is solved in that the screening drum is manufactured from a plane rectangular plate, which on its front side is provided with a plurality of parallel grooves extending over the entire plate. On the front side of the plate a number of supporting strips are attached across the plate. The plate is slotted from the rear side directly in front of the grooves, and the plate thereafter is bent to a drum. The characterizing features of the invention are defined in greater detail in the attached claims.

The invention implies that a slotted screening drum can be manufactured with high dimensional accuracy and with a large open area, without reducing the strength. The slots also can be given a smaller width than it is possible according to other methods.

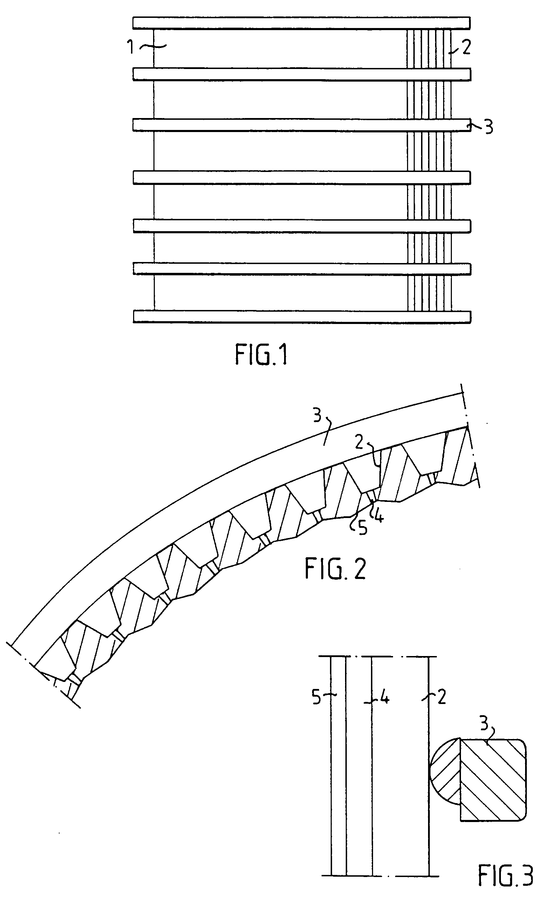

The invention is described in greater detail in the following, with reference to an embodiment thereof shown in the accompanying drawings, in which
- Fig. 1: shows a screening drum according to the invention,
- Fig. 2: is a cross-section of a portion of the screening drum,
- Fig. 3: shows a detail of a longitudinal section of the screening drum comprising a supporting strip,

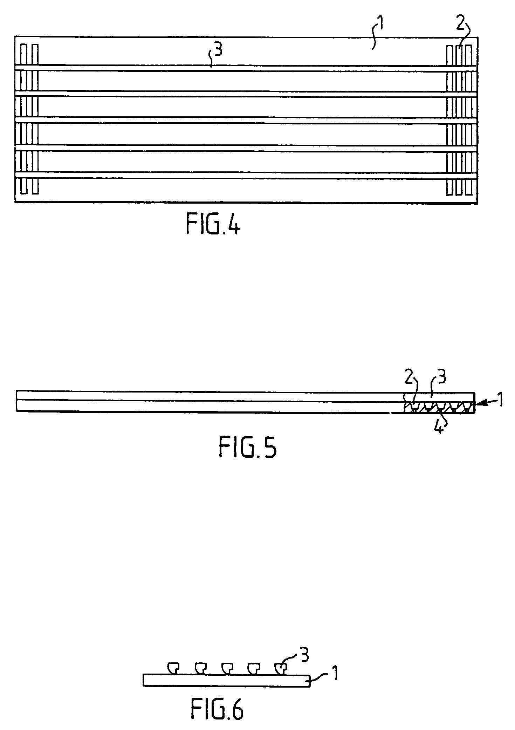

- Fig. 4: shows the screening drum prior to the bending in the form of a plane rectangular plate,
- Figs. 5 and 6: are lateral views of the plate according to Fig. 4.

According to the embodiment shown, the manufacturing starts from a rectangular plane plate 1, the thickness of which can be 4 - 10 mm. The size of the plate, of course, depends on the desired size of the screening drum. The plate is provided on its front side with a great number of parallel grooves, preferably by milling. The grooves should have V-shape, a smaller plane surface at the bottom. The division between the grooves can be 2-10 mm, preferably 2-6 mm. Thereafter a number of supporting strips 3 are welded on the front side of the plate across the grooves 2. The supporting strips 3 preferably are provided with a rounded portion to be laid against the plate. Due to the rounded portion, the open area can be given maximum size, because the smallest possible part of the groove is"obscured"by the strip. The strips, of course, can be formed also in another way. It is, thus, possible to increase the open area by 70%, compared with a conventional slotted drum.

The plate thereafter is slotted from the rear side by milling through slot openings 4 directly in front of the grooves 2. Besides, depressions 5 can be milled in connection to the slots. The depressions 5 extend longitudinallt about the slots 4 and provide the plate with a wavy or serrated surface. The thin portion of the plate where the slot openings 4 are located, should have a thickness of 0,2 - 1,5 mm, preferably 0,4 - 0,7 mm.

The plate finally is bent to drum shape, its front side facing outward. The plate is held together by the supporting strips 3, which ensure a uniform slot width. The slot width, of course, is reduced by the bending, but this reduction can be pre-calculated. This implies at the same time, that a slot is obtained which is narrower than can be milled at reasonable costs. The final gap width can be 0,05 - 1,0 mm, preferably 0,1 - 0,5 mm.

According to one embodiment, V-shaped grooves were milled to a depth of 6,5 mm in a plate of 8 mm thickness. The division was 10 mm. On the front side of the plate round irons with a diameter of 10 mm were welded. The plate was provided with slots of 0,45 mm width. By bending the plate to 800 mm diameter, the slot width was reduced to 0,30 mm.

The invention, of course, is not restricted to the embodiment shown, but can be varied within the scope of the invention as defined by the claims.

## Claims

1. A Method of manufacturing a screening drum for the screening of fibre material, wherein a plane rectangular plate (1) is provided on its front side with a great number of parallel grooves (2) extending over the entire plate, that a number of supporting strips (3) are welded on the front side of the plate across the grooves (2), that the plate (1) is slotted (4) from the rear side directly in front of the grooves (2), that the rear side of the plate (1) also is provided with longitudinal depressions (5), and that the plate finally is bent to a drum, its front side facing outward and the longitudinal slots (4) substantially axially directed.

2. A method as defined in claim 1, **characterized in** that the supporting strips (3) are attached with a limited contact surface to the plate (1).

3. A method as defined in any one of the preceding claims, **characterized in** that the grooves (2) and depressions (5) are milled so that the remaining plate thickness is 0.2 - 1.5 mm, preferably 0.4 - 0.7 mm.

4. A method as defined in any one of the preceding claims, **characterized in** that the slots (4) are milled so that the final gap width is 0.05 - 1.0 mm, preferably 0.1 - 0.5 mm.

## Patentansprüche

1. Verfahren zum Herstellen einer Siebtrommel zum Sieben von Fasermaterial, wobei eine ebene rechteckige Platte (1) an ihrer Vorderseite mit einer größeren Anzahl von parallelen Nuten (2) versehen wird, die sich über die gesamte Platte erstrecken, eine Anzahl von Haltestreifen (3) an der Vorderseite der Platte quer zu den Nuten (2) angeschweißt wird, die Platte (1) von der Rückseite direkt vor den Nuten (2) mit Schlitzen (4) versehen wird, die Rückseite der Platte (1) auch mit langgestreckten Vertiefungen (5) versehen wird und die Platte schließlich zu einer Trommel gebogen wird, wobei ihre Vorderseite nach außen gekehrt ist und die langgestreckten Schlitze (4) im wesentlichen axial ausgerichtet sind.

2. Verfahren nach Anspruch 1,
**dadurch gekennzeichnet**,
daß die Haltestreifen (3) mit einer begrenzten Kontaktfläche an der Platte (1) angebracht sind.

3. Verfahren nach einem der vorhergehenden Ansprüche,
**dadurch gekennzeichnet**,
daß die Nuten (2) und Vertiefungen (5) durch Fräsen ausgebildet sind, so daß die verbleibende Plattenstärke 0,2 bis 1,5 mm, vorzugsweise 0,4 bis 0,7 mm beträgt.

4. Verfahren nach einem der vorhergehenden Ansprüche,
**dadurch gekennzeichnet**,
daß die Schlitze (4) durch Fräsen ausgebildet sind, so daß die endgültige Spaltbreite 0,05 bis 1,0 mm, vorzugsweise 0,1 bis 0,5 mm beträgt.

## Revendications

1. Procédé de fabrication d'un tambour de criblage pour le classage d'un matériau en fibres dans lequel : une plaque plane rectangulaire (1) est prévue sur son côté frontal avec un grand nombre de rainures parallèles (2) s'étendant sur toute la plaque, un certain nombre de bandes de support (3) sont soudées sur le côté frontal de la plaque en travers des rainures (2), la plaque (1) est munie de fentes (4) à partir du côté postérieur directement en regard des rainures (2), le côté postérieur de la plaque (1) est également muni de parties abaissées longitudinales (5) et, la plaque est finalement recourbée selon un tambour, son côté frontal étant orienté vers l'extérieur et les fentes longitudinales (4) étant orientées sensiblement axialement.

2. Procédé selon la revendication 1, caractérisé en ce que les bandes de support (3) sont fixées à la plaque (1) avec une surface de contact limitée.

3. Procédé selon l'une quelconque des revendications précédentes, caractérisé en ce que les rainures (2) et les parties abaissées (5) sont meulées afin que l'épaisseur restante de la plaque soit 0,2 - 1,5 mm, de préférence 0,4-0,7 mm.

4. Procédé selon l'une quelconque des revendications précédentes caractérisé en ce que les fentes (4) sont meulées de façon que la largeur finale de l'intervalle soit 0,05-1,0 mm, de préférence 0,1-0,5 mm.
